# EUROPEAN PATENT SPECIFICATION

(11) **EP 3 779 134 B1**
(45) Date of publication and mention of the grant of the patent: **16.11.2022**
(21) Application number: 18912002.5
(22) Date of filing: 20.12.2018
(51) Int. Cl.: F01N 3/20, B60K 6/46, B60L 3/00, B60L 50/15, B60W 10/26, B60W 20/00, B62K 11/10, B62M 7/02

(54) **MOTORCYCLE**
MOTORRAD
MOTOCYCLETTE

(30) Priority: 28.03.2018 JP 2018061586
(43) Date of publication of application: 17.02.2021
(73) Proprietor: HONDA MOTOR CO., LTD., Minato-ku Tokyo 107-8556 (JP)
(72) Inventor: IBATA, Ryosuke, Wako-shi, Saitama 351-0193 (JP); KISHI, Nobuyuki, Wako-shi, Saitama 351-0193 (JP); KOSEI, Kazuyuki, Wako-shi, Saitama 351-0193 (JP)
(74) Representative: Dehns
(86) International application number: PCT/JP2018/046932
(87) International publication number: WO 2019/187409

(56) References cited:
- JP-A- H0 771 236
- JP-A- H10 176 561
- JP-A- 2003 269 208
- JP-A- 2006 174 543
- JP-A- 2010 023 758
- JP-A- 2014 080 163

## Description

### [Technical Field]

The present invention relates to a motorcycle comprising a catalytic device and a heating device for heating the catalytic device.

### [Background Art]

Conventionally, there is known a motorcycle in which a catalytic device provided therein is heated with an electric heater (see, for example, Patent Literature 1).

### [Citation List]

### [Patent Literature]

[Patent Literature 1]
Japanese Patent Laid-Open No. 2017-52500

### [Summary of Invention]

### [Technical Problem]

In Patent Literature 1, it requires a long time to heat when a small electric heater is used. Therefore, a case is assumed in which a temperature of a catalytic device has not reached a catalytic active temperature by the time at which it is desired to start power generation, making it impossible to prepare for power generation. Heating systems in a hybrid vehicle are known from JP2003269208 and JP2006174543.

An object of the present invention is to provide a motorcycle with which the temperature setting of a catalytic device, which is a preparation for power generation, can be performed in time.

### [Solution to Problem]

According to the invention a motorcycle is provided, comprising: an engine; a power generator driven by the engine; a battery for storing electric power generated by the power generator; an electric motor operated by the electric power of the battery; a drive wheel driven by the electric motor; a catalytic device for purifying exhaust gas discharged from the engine; and a heating device for heating the catalytic device, characterized in that: a power mode in which a remaining amount of the battery for starting power generation of the power generator is a first set value rp and an eco mode in which the remaining amount of the battery for starting power generation of the power generator is a second set value re that is lower than the first set value rp are provided; in the power mode, the catalytic device is heated during a stoppage of the engine; in the eco mode, a predicted remaining amount of the battery after a predetermined time elapse since the stoppage of the engine is calculated based on a remaining amount of the battery and an amount to be decreased per unit time from the remaining amount of the battery so as to heat the catalytic device for a predetermined time ts by means of the heating device when the predicted remaining amount has reached a predetermined value; and the predetermined time ts is obtained from a prediction curve of a temperature drop of the catalytic device due to natural cooling since the stoppage of the engine and a prediction curve of a temperature rise of the catalytic device due to heating by means of the heating device.

In the invention described above, the predetermined time may vary depending on a temperature of the catalytic device.

Further, in the invention described above, the temperature of the catalytic device may be calculated from the two prediction curves.

### [Advantageous Effect of Invention]

Since the present invention includes the heating device for heating the catalytic device and calculates the predicted remaining amount of the battery after a predetermined time elapse based on the remaining amount of the battery and the amount to be decreased per unit time from the remaining amount of the battery so as to heat the catalytic device by means of the heating device when the predicted remaining amount has reached a predetermined value, the temperature setting of the catalytic device, which is a preparation for power generation, can be performed in time by predicting the remaining amount of the battery after a predetermined time elapse.

In the invention described above, since the predetermined time varies depending on a temperature of the catalytic device, a preparation for power generation can be made in time according to the change in the temperature of the catalytic device.

Further, in the invention described above, since the temperature of the catalytic device is calculated from a prediction curve, the temperature of the catalytic device can be obtained quickly by creating a prediction curve in advance, and cost can also be reduced by omitting a temperature sensor.

Further, in the invention described above, since the power mode in which the remaining amount of the battery for starting power generation of the power generator is the first set value rp and the eco mode in which the remaining amount of the battery for starting power generation of the power generator is the second set value re that is lower than the first set value rp are provided so as to heat the catalytic device in the eco mode, it is possible to meet a wide range of requests from a driver by providing different battery remaining amount modes. Further, in the eco mode, since it is only necessary to heat the catalytic device in time for power generation, power consumption of the heating device can be suppressed.

The present invention includes the heating device that heats the catalytic device, in which the power mode in which the remaining amount of the battery for starting power generation of the power generator is the first set value rp and the eco mode in which the remaining amount of the battery for starting power generation of the power generator is the second set value re that is lower than the first set value rp are provided, and in the power mode, the temperature of the catalytic device does not easily decrease as the catalytic device is heated after the engine is stopped, so that heating time can be shortened and power consumption of the heating device can be suppressed due to the heating time reduction.

### [Brief Description of Drawings]

[Figure 1] Figure 1 is a left side view showing a motorcycle according to an embodiment of the present invention.
[Figure 2] Figure 2 is a right side view showing a power unit.
[Figure 3] Figure 3 is a graph showing changes over time in a battery remaining amount and a catalyst temperature after an engine is stopped during vehicle travel.
[Figure 4] Figure 4 is a flowchart showing a method in which the engine is operated during vehicle travel.
[Figure 5] Figure 5 is a graph showing changes over time in the battery remaining amount according to mode setting related to operation/stoppage of the engine.
[Figure 6] Figure 6 is a flowchart showing engine restart restriction according to a bank angle of a vehicle body of the motorcycle.

### [Description of Embodiment]

Hereinafter, an embodiment of the present invention will be described with reference to the drawings. Note that in the description, descriptions of directions such as front and back, right and left, and up and down are the same as directions with respect to a vehicle body unless otherwise specified. Further, in each figure, a reference sign FR indicates a front of the vehicle body, a reference sign UP indicates an upper side of the vehicle body, and a reference sign LH indicates a left side of the vehicle body.

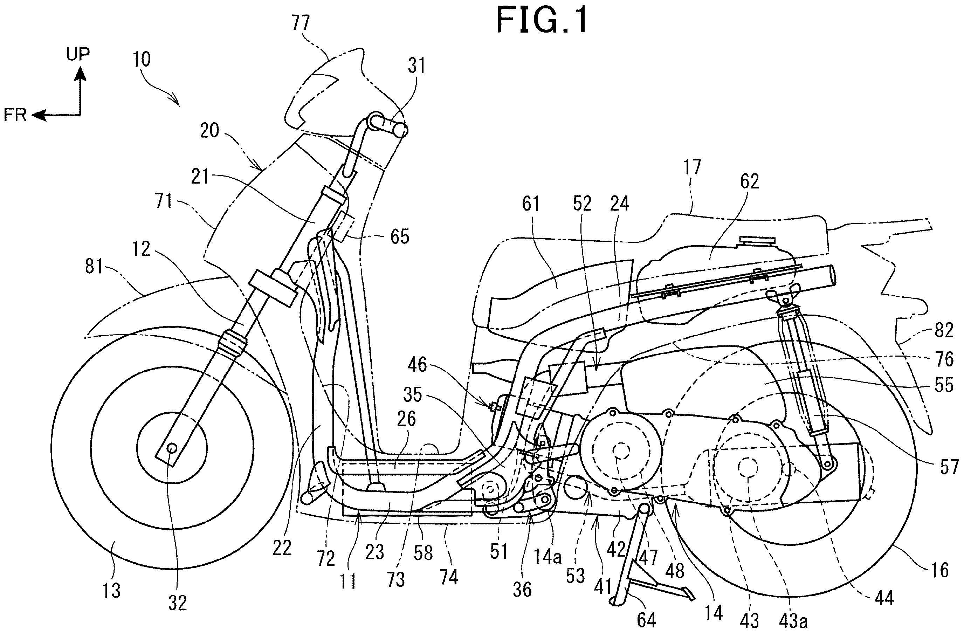

Fig. 1 is a left side view showing a motorcycle 10 according to an embodiment of the present invention.

The motorcycle 10 includes a body frame 11 serving as a skeleton, a front wheel 13 supported on a front end portion of the body frame 11 via a front fork 12, and a rear wheel 16 supported on a lower portion of the body frame 11 via a power unit 14.

The motorcycle 10 is a saddle-riding type vehicle of a scooter type in which an occupant sits by straddling a seat 17 disposed above the power unit 14 and the rear wheel 16, and includes a vehicle body frame 11 and a vehicle body cover 20 that covers the periphery of the vehicle body frame 11.

The body frame 11 includes a head pipe 21, a down frame 22, a pair of left and right under frames 23, a pair of left and right rear frames 24, and a pair of left and right step frames 26.

The head pipe 21 is provided at a front end portion of the vehicle body frame 11. The down frame 22 extends downward from the head pipe 21. The left and right under frames 23 extend rearward from the left and right sides of a lower portion of the down frame 22, respectively. The left and right rear frames 24 extend rearward and obliquely upward from rear ends of the left and right under frames 23, respectively. The left and right step frames 26 are connected to the down frame 22 and the left and right under frames 23, respectively.

The front fork 12 has a handle 31 attached to an upper portion of the front fork 12, and supports the front wheel 13 at a lower end portion of the front fork 12 via an axle 32.

The power unit 14 is supported by a pair of left and right pivot plates 35 respectively attached to the left and right under frames 23 and the left and right rear frames 24 via a link mechanism 36 so as to be swingable up and down. A vehicle body side connecting portion 14a is provided at a lower portion of the power unit 14, and the vehicle body side connecting portion 14a is connected to the link mechanism 36.

The power unit 14 includes an engine 41 provided at a front portion of the power unit 14, an electric motor 43 attached to a rear portion of a crankcase 42 of the engine 41, and an output shaft 44 connected to the electric motor 43 via a speed reduction mechanism (not shown). A reference sign 43a denotes a rotating shaft of the electric motor 43.

The engine 41 is a four-cycle engine, and includes the crankcase 42 and a cylinder portion 46 that protrudes forward from a front end portion of the crankcase 42.

The crankcase 42 accommodates a crankshaft 47 extending in a direction of a vehicle width and a power generator 48 provided around the crankshaft 47. The cylinder portion 46 includes a cylinder head 51, and the cylinder head 51 includes an intake device 52 connected to an upper portion of the cylinder head 51 and an exhaust device 53 connected to a lower portion of the cylinder head 51. The intake device 52 includes an air cleaner 55 attached to an upper portion of the power unit 14.

The rear wheel 16 is attached to the output shaft 44. The rear wheel 16 is driven by the electric motor 43.

The power generator 48 includes a stator (not shown) attached to the crankcase 42 and a rotor (not shown) attached to the crankshaft 47 and disposed inside the stator, and the rotor rotates together with the crankshaft 47 to generate electric power.

A rear cushion unit 57 is passed between a rear end portion of the power unit 14 and a rear portion of one of the left and right rear frames 24 (the left side rear frame 24).

A battery 58 is disposed between the left and right under frames 23 and between the left and right step frames 26. The battery 58 stores electric power generated by the power generator 48. The electric motor 43 is operated by the electric power stored in the battery 58, and the rear wheel 16 that is a drive wheel is driven by the electric motor 43. The battery 58 is provided with a remaining amount meter (not shown) that measures a remaining amount of stored electric power (amount of stored power).

A storage box 61 and a fuel tank 62 provided behind the storage box 61 are attached to the left and right rear frames 24. The storage box 61 and the fuel tank 62 are disposed below the seat 17.

A stand 64 is attached to a lower portion of the crankcase 42.

An ECU (Engine Control Unit) 65 that controls operation of the engine 41 is provided at a rear portion of the head pipe 21.

The vehicle body cover 20 includes a front cover 71, a pair of left and right leg shields 72, a pair of left and right floor steps 73, a pair of left and right side skirts 74, a pair of left and right body covers 76, and a handle cover 77.

The front cover 71 covers a front of the front fork 12. The left and right leg shields 72 are connected to both side edges of the front cover 71 and cover legs of a driver seated on the seat 17 from the front. The left and right floor steps 73 extend rearward from lower end portions of the left and right leg shields 72 and serve as a footrest for the driver. The left and right side skirts 74 extend downward from both side edges of the left and right floor steps 73, respectively. The left and right body covers 76 cover lower portions of both side portions of the seat 17. The handle cover 77 covers a central portion of the handle 31.

The battery 58 is disposed below the left and right floor steps 73. The battery 58 is covered with the vehicle body cover 20 including the left and right floor steps 73, the left and right side skirts 74, and the like.

The front wheel 13 is covered with a front fender 81 from above, and the rear wheel 16 is covered with a rear fender 82 from above.

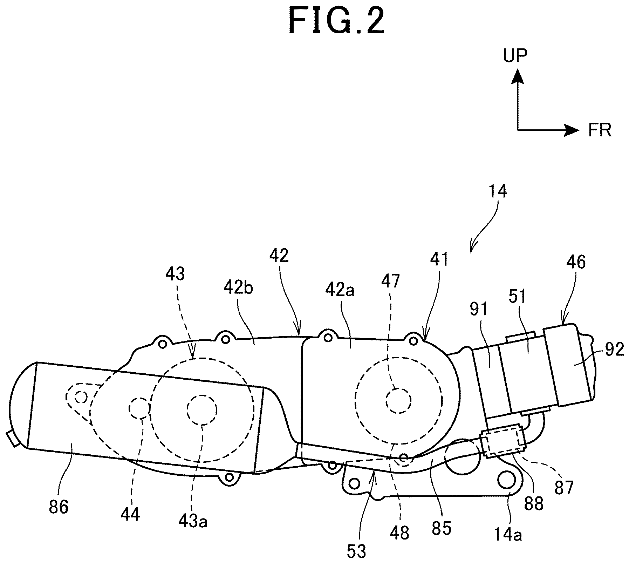

Fig. 2 is a right side view showing the power unit 14.

The crankcase 42 of the power unit 14 includes a crankcase main body 42a provided on the side of the engine 41, and a rear extension portion 42b extending rearward from the crankcase main body 42a. The rear extension portion 42b is provided with the electric motor 43, the speed reduction mechanism (not shown), and the output shaft 44.

The exhaust device 53 includes an exhaust pipe 85 extending downward and rearward from the cylinder head 51, a muffler 86 connected to a rear end portion of the exhaust pipe 85, and a catalytic device 87 provided midway of the exhaust pipe 85 (specifically, at a position near the cylinder head 51), and a heating device 88 capable of heating the catalytic device 87.

The catalytic device 87 purifies unpurified components such as a hydrocarbon (HC), a carbon monoxide (CO), a nitrogen oxide (NOx), and the like contained in exhaust gas flowing in the exhaust pipe 85 by removing them with a catalyst.

The heating device 88 is formed of an electric heater disposed so as to surround the catalytic device 87, and raises the temperature of the catalyst included in the catalytic device 87 to a temperature at which the catalyst is activated (a catalytic active temperature). In this regard, note that the temperature of the catalytic device 87 (the temperature of the outer surface) is regarded as the temperature of the catalyst in the catalytic device 87.

The exhaust pipe 85 extends back and forth on a side of a lower portion of the crankcase 42 (specifically, the crankcase main body 42a). The muffler 86 is disposed on a side of the crankcase 42 (specifically, the rear extension portion 42b) and the electric motor 43. The rear wheel 16 (see Fig. 1) is disposed between the rear extension portion 42b and the muffler 86.

In Figs. 1 and 2, the motorcycle 10 is a series hybrid vehicle in which the power generator 48 is driven by the engine 41, and electric power generated by the power generator 48 is stored in the battery 58, and the rear wheel is driven by the electric motor 43 that operates with the electric power of the battery 58.

As described above, by arranging the engine 41 and the electric motor 43 that are two drive sources in the same crankcase 42, it is possible to reduce the number of parts and also to reduce a weight, as compared with the case in which the engine 41 and the electric motor 43 are arranged separately.

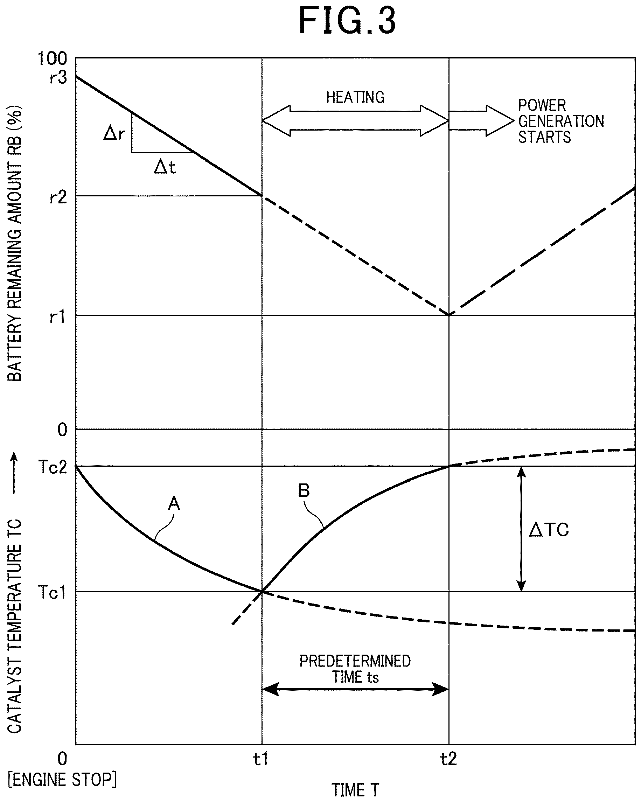

Fig. 3 is a graph showing changes over time in the battery remaining amount and the catalyst temperature after the engine is stopped during vehicle travel.

The vertical axis represents a battery remaining amount RB (%) and a catalyst temperature TC, and the horizontal axis represents a time T after the engine is stopped. (Refer to Figs. 1 and 2 for the reference signs in the following description.)

From the time T = 0 to t1, the battery remaining amount RB is a value actually measured by the remaining amount meter, and the battery remaining amount RB from the time T = t1 to t2 is estimated by using this actual measurement value.

The catalyst temperature TC is a predicted value based on prediction curves created based on actual measurement data, and from the time T = 0 to t1, a portion of a curve A for predicting a temperature decrease of the catalytic device 87 due to natural cooling is used, and from time T = t1 to t2, a portion of a curve B for predicting a temperature rise of the catalytic device 87 due to heating by means of the heating device 88 is used.

First, the battery remaining amount RB and the catalyst temperature TC during the time T = 0 to t1 will be described.

After the engine 41 stops at the time T = 0, the battery remaining amount RB gradually decreases from RB = r3 due to power consumption by the electric motor 43.

When the battery remaining amount RB reaches r2 at the time T = t1, the heating device 88 is energized and heating of the catalytic device 87 by means of the heating device 88 is started.

Further, for example, when the engine 41 is stopped at the time T = 0 in a state in which the catalyst temperature TC is Tc2 (catalytic active temperature), the catalyst temperature TC decreases as the time elapses from the TC = Tc2. At the time T = t1, the catalyst temperature TC is Tc1.

Next, the battery remaining amount RB and the catalyst temperature TC during the time T = t1 to t2 will be described. At the time T = t2 after a predetermined time ts has elapsed from the time T = t1, energization to the heating device 88 is stopped, and heating of the catalytic device 87 ends. This heating is a preparation before power generation (which will be described in detail later).

Also, during the time T = t1 to t2, the battery remaining amount RB gradually decreases from r2 due to power consumption by the electric motor 43 and the heating device 88, and at the time T = t2, the battery remaining amount RB reaches r1. The battery remaining amount r1 is, for example, 30%, and is a battery remaining amount threshold value in an eco mode of the engine 41 that will be described in detail later.

At the time T = t2, power generation by the power generator 48 is started and generated electric power is stored in the battery 58, thereby gradually increasing the battery remaining amount RB from the time T = t2 onwards.

At a predetermined time ts from the time T = t1 to T = t2 described above, the battery remaining amount RB is predicted based on a battery remaining amount r3 at the time T = 0 and an amount to be decreased Δr from the battery remaining amount RB per unit time Δt from the time T = 0 to t1.

During the time T = t1 to t2, the catalyst temperature TC rises from Tc1 to the catalytic active temperature Tc2 by heating the catalytic device 87 by means of the heating device 88, and a preparation before power generation is completed. That is, if the engine 41 is started and the power generator 48 is driven, it is possible to suppress discharge of unpurified components in exhaust gas of the engine 41.

The time T = t2 described above is obtained from the actual measurement value of the battery remaining amount RB from the time T = 0 onwards, and the time t1 is obtained from the fact that (1) a temperature change ΔTC (= Tc2 - Tc1) at the time (t1-0 = t1) in the prediction curve A is equal to (2) a temperature change ΔTC at the time (t2 - t1) in the prediction curve B.

The above two prediction curves A and B are obtained in advance, so that it is not necessary to measure the temperature of the catalytic device 87 directly with a thermometer or the like.

Since the catalyst temperature TC is affected by an atmospheric temperature, a vehicle speed, and the like, if a change over time in the catalyst temperature TC is obtained for each of several atmospheric temperatures and several vehicle speeds in the above two prediction curves A and B, an accuracy in predicting the catalyst temperature TC can be further increased.

As shown in Figs. 2 and 3 described above, the predetermined time ts varies depending on a temperature of the catalytic device 87. For example, in Fig. 3, if the catalyst temperature TC is lower, the predetermined time ts until the catalyst temperature TC rises to the catalytic active temperature becomes longer, and if the catalyst temperature TC is higher, the predetermined time ts until the catalyst temperature TC rises to the catalytic active temperature becomes shorter.

According to this configuration, a preparation for power generation can be made in time corresponding to the change in the temperature of the catalytic device 87.

Further, since the temperature of the catalytic device 87 is calculated from the prediction curves A and B, the temperature of the catalytic device 87 can be obtained quickly by creating the prediction curves A and B in advance, and cost can also be reduced by omitting a temperature sensor.

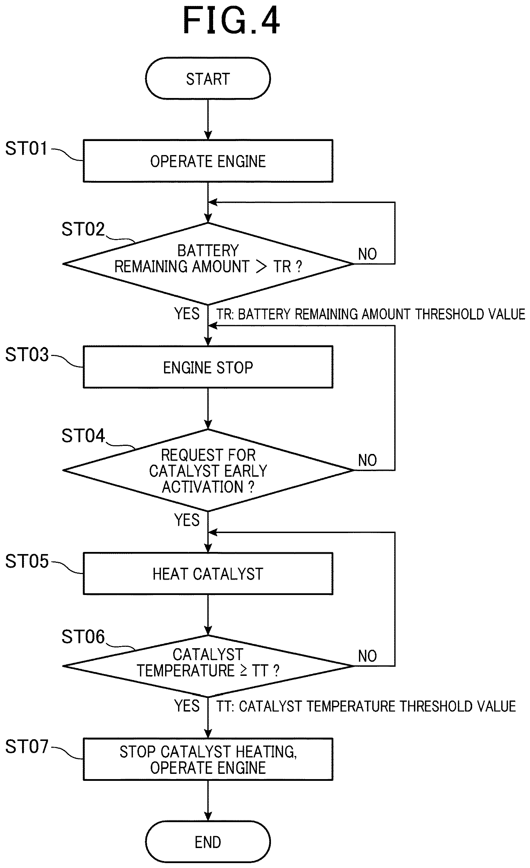

Fig. 4 is a flowchart showing a method in which the engine 41 is operated during vehicle travel. (Refer to Figs. 1 and 2 for the reference signs in the following description.)

Operation of the engine 41 is started (step ST01). Thereby, the power generator 48 is driven by the engine 41 to generate electric power, and the generated electric power is stored in the battery 58.

Next, the ECU 65 determines whether the battery remaining amount is larger than an upper battery remaining amount threshold value TR (step ST02). The battery remaining amount threshold value TR is, for example, 95 to 100%.

If the battery remaining amount is less than or equal to the battery remaining amount threshold value TR (step ST02, NO), the engine operation is continued.

If the battery remaining amount is larger than the battery remaining amount threshold value TR (step ST02, YES), the engine 41 is stopped (step ST03). During the stoppage of the engine 41, the temperature of the catalytic device 87 gradually decreases, and the catalytic active performance gradually deteriorates.

Next, the ECU 65 determines whether there is a catalyst early activation request (step ST04). When power generation is necessary, there is a catalyst early activation request.

If there is no catalyst early activation request (step ST04, NO), the engine stoppage is continued.

If there is a catalyst early activation request (step ST04, YES), the catalytic device 87 is heated by means of the heating device 88 (step ST05). With this heating, power generation is prepared.

Next, the ECU 65 determines whether the catalyst temperature is higher than or equal to a catalyst temperature threshold value (catalytic active temperature) TT (step ST06).

If the catalyst temperature is lower than the catalyst temperature threshold value TT (step ST06, NO), heating of the catalytic device 87 is continued.

If the catalyst temperature is higher than or equal to the catalyst temperature threshold value TT (step ST06, YES), heating of the catalytic device 87 is stopped and an operation of the engine 41 is started (step ST07). Thereby, power generation is performed.

As described above, heating of the catalytic device 87 in step ST05 is performed so that the catalyst temperature reaches the catalytic active temperature by the time at which the engine is operated again. Thereby, when power generation by means of the engine 41 is resumed, the catalyst purification performance of the catalytic device 87 can be improved, and the discharge of unpurified components in exhaust gas can be suppressed.

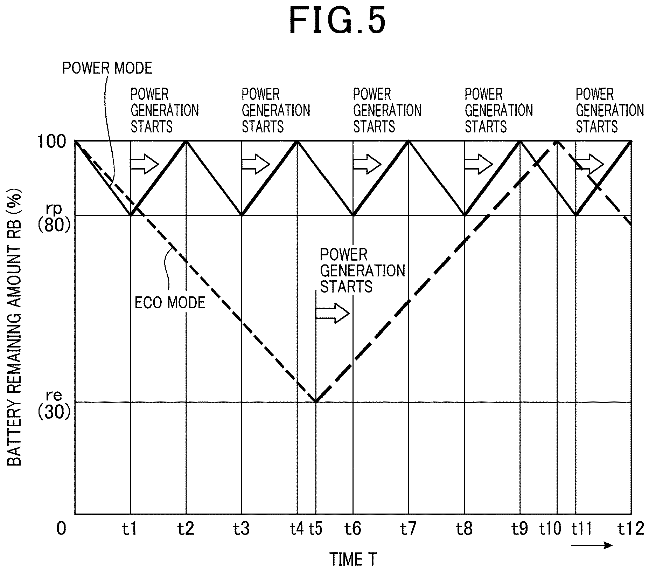

Fig. 5 is a graph showing changes over time in the battery remaining amount according to mode setting related to operation/stoppage of the engine 41.

The vertical axis represents the battery remaining amount RB (unit: %), and the horizontal axis represents the time T since the stoppage of the engine.

### (Refer to Figs. 1 and 2 for the reference signs in the following description.)

The ECU 65 executes a power mode and an eco mode as operation/stop setting modes of the engine 41.

The power mode is a mode of the engine 41 for travelling with an increased output of the electric motor 43 during vehicle travel, and as the power consumed by battery 58 is large, the battery 58 is frequently charged by the power generator 48.

The eco mode is a mode of the engine 41 for travelling with a reduced output of the electric motor 43 during vehicle travel, and as the power consumed by the battery 58 is small, the battery 58 is charged by the power generator 48 at a longer time interval than that of the power mode.

In a power mode diagram line in the graph, the engine 41 is stopped during vehicle travel at the time T = 0. If the battery remaining amount RB is assumed to be 100% (full charge) at the time T = 0, the battery remaining amount RB decreases with time from 100%, and at the time T = t1, the battery remaining amount RB reaches rp.

For example, the battery remaining amount rp is 80%. This 80% is defined as a lower battery remaining amount threshold value (a first set value) for starting power generation in the power mode. The engine 41 is started at the time T = t1, and power generation by the power generator 48 is started. Thereby, the battery remaining amount RB gradually increases, and reaches the battery remaining amount RB = 100% again at the time T = t2. At this point of time, the engine 41 is stopped, and the power generation by the power generator 48 is temporarily ended. From the time T = t2 onwards, the above processing is repeated. While the engine is stopped in the power mode, the catalytic device 87 is heated by the heating device 88. Since the time during which the engine is stopped is short and the decrease in the catalyst temperature is small, power consumption in the heating device 88 can be suppressed.

In the eco-mode diagram line in the graph, when the engine 41 is stopped during vehicle travel at the time T = 0 and the battery remaining amount RB = 100%, the battery remaining amount RB gradually decreases, and at the time T = t5, the battery remaining amount RB reaches re.

For example, the battery remaining amount re is 30%. This 30% is defined as a lower battery remaining amount threshold value for starting power generation in the eco mode. The engine 41 is started at the time T = t5, and power generation by the power generator 48 is started. Thereby, the battery remaining amount RB gradually increases, and reaches the battery remaining amount RB = 100% again at the time T = t10. At this point of time, the engine 41 is stopped, and the power generation by the power generator 48 is temporarily ended. From the time T = t10 onwards, the above processing is repeated. While the engine is stopped in the eco mode, as shown in Fig. 3, the battery remaining amount RB after a predetermined time elapse during the stoppage of the engine is predicted, and the catalytic device 87 is heated in preparation of raising the catalyst temperature to the catalytic active temperature by the time at which power generation is started. In this way, in the eco mode, since the heating device 88 is operated only for a certain period of time before power generation, power consumption in the heating device 88 can be suppressed. Further, since the prediction curves of the catalyst temperature are used, a measurement sensor is obviated, which allows the catalyst temperature to be obtained quickly and the cost to be suppressed.

As shown in Figs. 1, 2, and 3, the motorcycle 10 includes the engine 41, the power generator 48, the battery 58, the electric motor 43, the rear wheel 16 as a drive wheel, the catalytic device 87, and the heating device 88.

The power generator 48 is driven by the engine 41. The battery 58 stores electric power generated by the power generator 48. The electric motor 43 is operated by the electric power of the battery 58. The rear wheel 16 is driven by the electric motor 43. The catalytic device 87 purifies exhaust gas discharged from the engine 41. The heating device 88 heats the catalytic device 87.

In the motorcycle 10, the ECU 65 calculates the predicted remaining amount of the battery 58 after a predetermined time elapse based on the remaining amount of the battery 58 and the amount to be decreased per unit time from the remaining amount of the battery 58 so as to heat the catalytic device 87 by means of the heating device 88 when the predicted remaining amount has reached the battery remaining amount r2 as a predetermined value, or when the time t1, which is a predicted time for the predicted remaining amount reaches the battery remaining amount r2, is reached.

According to this configuration, the temperature setting of the catalytic device 87, which is a preparation for power generation, can be performed in time by predicting the remaining amount of the battery 58 after a predetermined time elapse or the time at which the battery remaining amount reaches this battery remaining amount.

Further, as shown in Figs. 1 to 3 and Fig. 5, the power mode in which the remaining amount of the battery 58 for starting power generation of the power generator 48 is the battery remaining amount rp as the first set value and the eco mode in which the remaining amount of the battery 58 for starting power generation of the power generator 48 is the battery remaining amount re as the second set value that is lower than the first set value rp are provided so as to heat the catalytic device 87 in the eco mode.

According to this configuration, it is possible to meet a wide variety of requests from a driver by providing different battery remaining amount modes. Further, in the eco mode, since it is only necessary to heat the catalytic device 87 in time for power generation, power consumption of the heating device 88 can be suppressed.

In addition, as shown in Figs. 1, 2 and 5, in the power mode, since the catalytic device 87 is heated after the engine 41 is stopped, the temperature of the catalytic device 87 does not easily decrease, so that the heating time can be shortened. Further, as the heating time is shortened, power consumption of the heating device 88 can be suppressed.

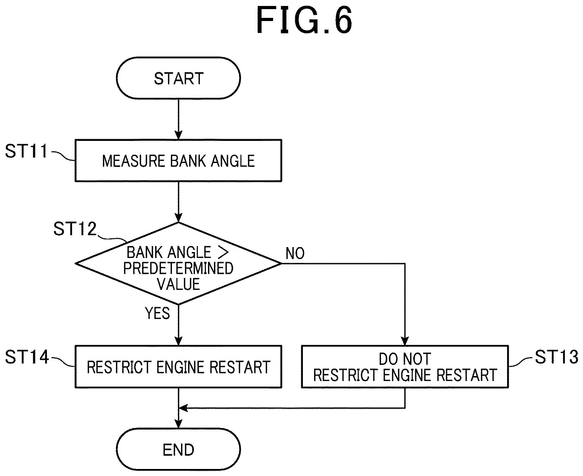

Fig. 6 is a flowchart showing engine restart restriction according to a bank angle of a vehicle body of the motorcycle 10. (Refer to Figs. 1 and 2 for reference signs in the description below.)

While the motorcycle 10 is travelling, a left-right inclination angle of the vehicle body, that is, a bank angle is measured by a bank angle sensor provided on the vehicle body of the motorcycle 10 (step ST11).

The ECU 65 determines whether the measured bank angle is larger than a predetermined value (step ST12).

If the bank angle is smaller than or equal to the predetermined value (step ST12, NO), restart of the engine 41 is not restricted when the engine 41 is stopped (step ST13). Even if the engine 41 is restarted, the start of the engine 41 has little influence on a behavior of the vehicle body.

When the bank angle is larger than the predetermined value (step ST12, YES), restart of the engine 41 is restricted (step ST14). If the engine 41 is started, the behavior of the vehicle body of the motorcycle 10 may increase.

The embodiment described above represents only an aspect of the present invention, and can be modified and applied without departing from the scope of the present invention as defined by the appended claims.

### [Reference Signs List]

- 10: Motorcycle
- 16: Rear wheel (drive wheel)
- 41: Engine
- 43: Electric motor
- 48: Power generator
- 58: Battery
- 87: Catalytic device
- 88: Heating device
- re: Battery remaining amount (second set value)
- rp: Battery remaining amount (first set value)

## Claims

1. A motorcycle comprising:
an engine (41);
a power generator (48) driven by the engine (41);
a battery (58) for storing electric power generated by the power generator (48);
an electric motor (43) operated by the electric power of the battery (58);
a drive wheel (16) driven by the electric motor (43) ;
a catalytic device (87) for purifying exhaust gas discharged from the engine (41); and
a heating device (88) for heating the catalytic device (87), **characterized in that**:
a power mode in which a remaining amount of the battery (58) for starting power generation of the power generator (48) is a first set value rp and an eco mode in which the remaining amount of the battery (58) for starting power generation of the power generator (48) is a second set value re that is lower than the first set value rp are provided;
in the power mode, the catalytic device (87) is heated during a stoppage of the engine (41);
in the eco mode, a predicted remaining amount of the battery (58) after a predetermined time elapse since the stoppage of the engine is calculated based on a remaining amount of the battery (58) and an amount to be decreased per unit time from the remaining amount of the battery (58)so as to heat the catalytic device (87) for a predetermined time ts by means of the heating device (88) when the predicted remaining amount has reached a predetermined value; and
the predetermined time ts is obtained from a prediction curve of a temperature drop of the catalytic device (87) due to natural cooling since the stoppage of the engine (41) and a prediction curve of a temperature rise of the catalytic device (87) due to heating by means of the heating device (88).

2. The motorcycle according to Claim 1, wherein the predetermined time ts varies depending on a temperature of the catalytic device (87).

3. The motorcycle according to Claim 2, wherein the temperature of the catalytic device (87) is calculated from the two prediction curves.

## Patentansprüche

1. Motorrad, umfassend:
einen Motor (41);
einen Stromgenerator (48), der von dem Motor (41) angetrieben wird;
eine Batterie (58) zum Speichern des von dem Stromgenerator (48) erzeugten elektrischen Stroms;
einen Elektromotor (43), der mit dem elektrischen Strom der Batterie (58) betrieben wird;
ein Antriebsrad (16), das durch den Elektromotor (43) angetrieben wird;
eine katalytische Vorrichtung (87) zum Reinigen des von dem Motor (41) ausgestoßenen Abgases; und
eine Heizvorrichtung (88) zum Beheizen der katalytischen Vorrichtung (87), **dadurch gekennzeichnet, dass**:
ein Leistungsmodus, in dem eine verbleibende Menge der Batterie (58) für die Startstromerzeugung des Stromgenerators (48) ein erster Sollwert rp ist, und ein Eco-Modus, in dem die verbleibende Menge der Batterie (58) für die Startstromerzeugung des Stromgenerators (48) ein zweiter Sollwert re ist, der niedriger ist als der erste Sollwert rp, bereitgestellt werden;
im Leistungsmodus die katalytische Vorrichtung (87) während eines Motorstillstands (41) beheizt wird;
im Eco-Modus eine vorhergesagte verbleibende Menge der Batterie (58) nach einer vorbestimmten Zeit, die seit dem Abstellen des Motors verstrichen ist, auf der Grundlage einer verbleibenden Menge der Batterie (58) und einer pro Zeiteinheit von der verbleibenden Menge der Batterie (58) zu verringernden Menge berechnet wird, um die katalytische Vorrichtung (87) für eine vorbestimmte Zeit ts mittels der Heizvorrichtung (88) zu beheizen, wenn die vorhergesagte verbleibende Menge einen vorbestimmten Wert erreicht hat; und
die vorbestimmte Zeit ts aus einer Vorhersagekurve eines Temperaturabfalls der katalytischen Vorrichtung (87) aufgrund der natürlichen Abkühlung seit dem Stillstand des Motors (41) und einer Vorhersagekurve eines Temperaturanstiegs der katalytischen Vorrichtung (87) aufgrund der Beheizung mittels der Heizvorrichtung (88) erhalten wird.

2. Motorrad nach Anspruch 1, wobei die vorbestimmte Zeit ts in Abhängigkeit von einer Temperatur der katalytischen Vorrichtung (87) variiert.

3. Motorrad nach Anspruch 2, wobei die Temperatur der katalytischen Vorrichtung (87) aus den beiden Vorhersagekurven berechnet wird.

## Revendications

1. Motocyclette comprenant :
un moteur thermique (41) ;
un générateur d'énergie (48) entraîné par le moteur thermique (41) ;
une batterie (58) pour stocker une énergie électrique générée par le générateur d'énergie (48) ;
un moteur électrique (43) actionné par l'énergie électrique de la batterie (58) ;
une roue motrice (16) entraînée par le moteur électrique (43) ;
un dispositif catalytique (87) pour purifier le gaz d'échappement évacué du moteur (41) ; et
un dispositif de chauffage (88) pour chauffer le dispositif catalytique (87), **caractérisée en ce que** :
un mode d'alimentation dans lequel une quantité restante de la batterie (58) pour démarrer une génération d'énergie du générateur d'énergie (48) est une première valeur définie rp et un mode éco dans lequel la quantité restante de la batterie (58) pour démarrer une génération d'énergie du générateur d'énergie (48) est une seconde valeur définie re qui est inférieure à la première valeur définie rp sont fournis ;
dans le mode d'alimentation, le dispositif catalytique (87) est chauffé pendant un arrêt du moteur (41) ;
dans le mode éco, une quantité restante prédite de la batterie (58) après écoulement d'un temps prédéterminé depuis l'arrêt du moteur est calculée sur la base d'une quantité restante de la batterie (58) et d'une quantité de réduction par unité de temps à partir de la quantité restante de la batterie (58) afin de chauffer le dispositif catalytique (87) pendant un temps ts prédéterminé au moyen du dispositif de chauffage (88) lorsque la quantité restante prévue a atteint une valeur prédéterminée ; et
le temps ts prédéterminé est obtenu à partir d'une courbe de prédiction d'une chute de température du dispositif catalytique (87) liée à un refroidissement naturel depuis l'arrêt du moteur (41) et d'une courbe de prédiction d'une hausse de température du dispositif catalytique (87) liée à un chauffage au moyen du dispositif de chauffage (88).

2. Motocyclette selon la revendication 1, dans laquelle le temps ts prédéterminé varie en fonction d'une température du dispositif catalytique (87).

3. Motocyclette selon la revendication 2, dans laquelle la température du dispositif catalytique (87) est calculée à partir des deux courbes de prédiction.
